# EUROPEAN PATENT APPLICATION

(11) **EP 2 723 110 A1**
(43) Date of publication of application: **23.04.2014**
(21) Application number: 12840788.9
(22) Date of filing: 23.08.2012
(51) Int. Cl.: H04W 8/18, H04W 8/24, H04W 12/06, H04M 1/673, G06F 12/14

(54) **WIRELESS COMMUNICATION DEVICE AND CONFIGURATION METHOD THEREOF**

(30) Priority: 12.10.2011 CN 201110307958
(71) Applicant: Huizhou TCL Mobile Communication Co., Ltd., Huizhou, Guangdong 516006 (CN)
(72) Inventor: HUANG, Yi, Huizhou Guangdong 516006 (CN)
(74) Representative: Viering, Jentschura & Partner Patent- und Rechtsanwälte
(86) International application number: PCT/CN2012/080483
(87) International publication number: WO 2013/053269

(57) **Abstract**

The present disclosure discloses a wireless communication apparatus and a configuring method thereof. The configuring method comprises: verifying an account which is logging-in; reading configuration information corresponding to the account after the account has passed the verification, wherein the configuration information is preset by a special-authority account; using the configuration information to configure the wireless communication apparatus. In this way, the present disclosure can use the configuration information customized for the account to configure the wireless communication apparatus automatically, so time for changing configuration items after a user logs in is saved and the user experience is improved.

## Description

### FIELD OF THE INVENTION

The present disclosure generally relates to the technical field of wireless communications, and more particularly, to a wireless communication apparatus and a configuring method thereof.

### BACKGROUND OF THE INVENTION

With rapid development of mobile phone applications and especially smartphone applications, the stores have been sub-divided according to functions and targeted customers to meet demands of different age groups. However, it is often the case that not every family member in a family has a smartphone or knows how to download and manage various applications. Therefore, a mobile phone with many functions is often not only a personal terminal, but is also a household entertainment unit that centers around its owner just like a personal computer (PC).

However, in use of the aforesaid mobile phones, the authority of use and the system configurations remain the same for every user, so some problems are often caused. For example, misoperation by children or the aged people may lead to loss of some data or cause unexpected dialing of calls or sending of messages; it is difficult to find software or books suitable for a user himself from a complex mobile phone interface; radiation from the mobile phone is harmful to the children; too small fonts are unsuitable for the aged people, and so on.

The aforesaid problems can be solved by manual operations, i.e., by manually changing configurations of the mobile phones. For example, the wireless module can be deactivated by turning on a flying mode to prevent unexpected dialing of calls or sending of messages, the fonts can be amplified by changing the display configurations to facilitate use by the aged people, and so on. However, these operations must be performed manually, which is time consuming and is liable to errors.

Accordingly, a need exists in the art to provide a wireless communication apparatus and a configuring method thereof capable of solving the problem that the conventional wireless communication apparatuses satisfy the usage habits of different users only by manually changing the configurations.

### SUMMARY OF THE INVENTION

A primary technical problem to be solved by the present disclosure is to provide a wireless communication apparatus and a configuring method thereof, which eliminate the need of manually configuring the wireless communication apparatus by using configuration information customized for an account to configure the wireless communication apparatus automatically.

To solve the aforesaid technical problem, one technical solution of the present disclosure is to provide a configuring method for a wireless communication apparatus, which comprises: verifying an account which is logging-in; reading configuration information corresponding to the account after the account has passed the verification, wherein the configuration information is preset by a special-authority account; and using the configuration information to configure the wireless communication apparatus. The step of verifying an account which is logging-in comprises verifying whether an account name of the account does exist and whether a password of the account is correct, and when the account name of the account does exist and the password of the account is correct, then the verification passes. The step of using the configuration information to configure the wireless communication apparatus comprises: configuring applications displayed on a screen of the wireless communication apparatus, configuring activation or deactivation of a wireless module or a background functional module, configuring an accessing authority of a menu or a personal information module, or configuring system parameters for displaying or for sounding.

According to a preferred embodiment of the present disclosure, the configuring method further comprises: creating the account and setting the configuration information corresponding to the account by the special-authority account before verifying the account.

According to a preferred embodiment of the present disclosure, the configuring method further comprises: resetting the configuration information corresponding to the account or deleting the account by the special-authority account after the special-authority account has created the account and set the configuration information corresponding to the account.

To solve the aforesaid technical problem, another technical solution of the present disclosure is to provide a configuring method for a wireless communication apparatus, which comprises: verifying an account which is logging-in; reading configuration information corresponding to the account after the account has passed the verification, wherein the configuration information is preset by a special-authority account; and using the configuration information to configure the wireless communication apparatus.

According to a preferred embodiment of the present disclosure, the step of verifying an account which is logging-in comprises: verifying whether an account name of the account does exist and whether a password of the account is correct, and when the account name of the account does exist and the password of the account is correct, then the verification passes.

According to a preferred embodiment of the present disclosure, the step of using the configuration information to configure the wireless communication apparatus comprises: configuring applications displayed on a screen of the wireless communication apparatus, configuring activation or deactivation of a wireless module or a background functional module, configuring an accessing authority of a menu or a personal information module, or configuring system parameters for displaying or for sounding.

According to a preferred embodiment of the present disclosure, the configuring method further comprises: creating the account and setting the configuration information corresponding to the account by the special-authority account before verifying the account.

According to a preferred embodiment of the present disclosure, the configuring method further comprises: resetting the configuration information corresponding to the account or deleting the account by the special-authority account after the special-authority account has created the account and set the configuration information corresponding to the account.

To solve the aforesaid technical problem, yet another technical solution of the present disclosure is to provide a wireless communication apparatus, which comprises: an account log-in module being configured to verify an account which is logging-in; a configuration reading module being configured to read configuration information corresponding to the account after the account has passed the verification, wherein the configuration information is preset by a special-authority account; and a configuration processing module being configured to use the configuration information to configure the wireless communication apparatus.

According to a preferred embodiment of the present disclosure, the account log-in module verifies whether an account name of the account does exist and whether a password of the account is correct, and when the account name of the account does exist and the password of the account is correct, then the verification passes.

According to a preferred embodiment of the present disclosure, the configuration processing module uses the configuration information to configure applications displayed on a screen of the wireless communication apparatus, configure activation or deactivation of a wireless module or a background functional module, configure an accessing authority of a menu or a personal information module, or configure system parameters for displaying or for sounding.

According to a preferred embodiment of the present disclosure, the wireless communication apparatus further comprises an account management module. The special-authority account creates the account and set the configuration information corresponding to the account via the account management module before verifying the account.

According to a preferred embodiment of the present disclosure, the special-authority account resets the configuration information corresponding to the account or deletes the account via the account management module after the special-authority account has created the account and set the configuration information corresponding to the account.

As compared to the prior art, the present disclosure has the following benefits: the wireless communication apparatus and the configuring method thereof according to the present disclosure use the configuration information customized for the account to configure the wireless communication apparatus automatically, so time for changing configuration items after a user logs-in is saved and the user experience is improved.

### BRIEF DESCRIPTION OF THE DRAWINGS

FIG. 1 is a schematic structural view of a wireless communication apparatus according to an embodiment of the present disclosure;
FIG. 2 is a flowchart diagram of a configuring method for a wireless communication apparatus according to an embodiment of the present disclosure;
FIG. 3 is a detailed flowchart diagram of step 201 of the configuring method for a wireless communication apparatus according to the embodiment of the present disclosure;
FIG. 4 is a detailed flowchart diagram of step 203 of the configuring method for a wireless communication apparatus according to the embodiment of the present disclosure; and
FIG. 5 is a flowchart diagram of an account management process for a wireless communication apparatus according to an embodiment of the present disclosure.

### DETAILED DESCRIPTION OF THE INVENTION

In the following description, the present disclosure will be explained with reference to the attached drawings and embodiments thereof.

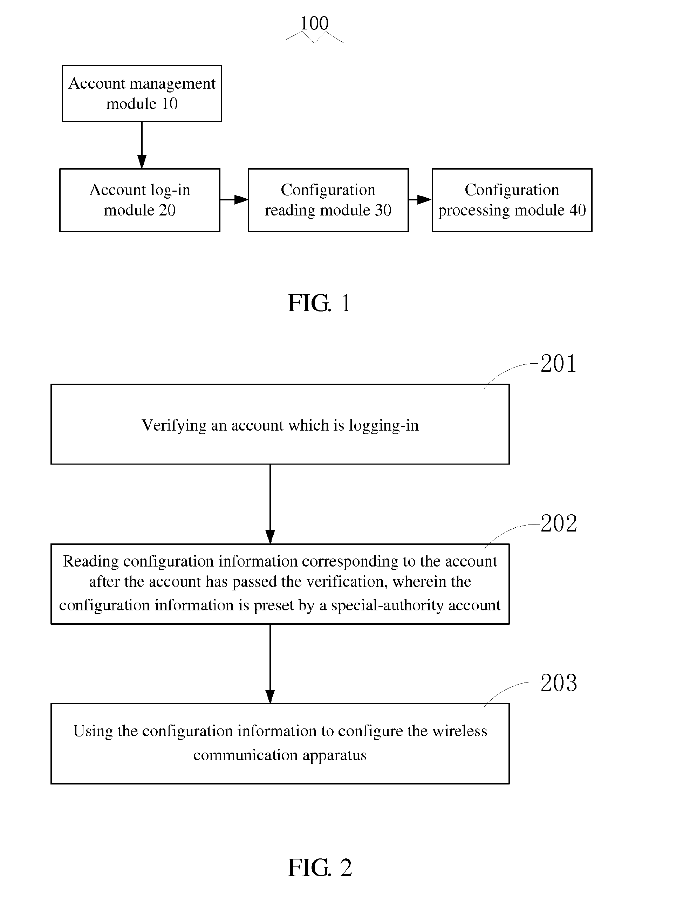

Referring to FIG. 1, FIG. 1 is a schematic structural view of a wireless communication apparatus according to an embodiment of the present disclosure. As shown in FIG. 1, the wireless communication apparatus 100 according to this embodiment comprises an account management module 10, an account log-in module 20, a configuration reading module 30 and a configuration processing module 40.

The account management module 10 is configured to manage an account that logs in the wireless communication apparatus 100, including creating an account, editing an account and deleting an account. Specifically, an administrator account, an account with an administrator authority, or any other special-authority account (which are collectively termed as a special-authority account) can create an account via the account management module 10 after the special-authority account has logged-in. In particular, the special-authority account can assign one unique account name to an account, set a password corresponding to the account name, and set configuration information corresponding the account name to initial settings. The initial settings comprise setting the configuration information corresponding to the account name to be the same as that of the administrator account. Then, the special-authority account can further edit the account via the account management module 10. In particular, the special-authority account can reset the configuration information of the already-created account. In this embodiment, the account name, the password and the configuration information can be stored in a linked list or other data structures, and are associated with each other so that the password and the configuration information corresponding to an account name can be found according to the account name. The special-authority account can further delete the account via the account management module 10. In particular, the special-authority account can delete or make marks to delete the account name, the password and the configuration information corresponding to the account from the linked list or other data structures. A preferable account management process of the account management module 10 will be described later.

The account log-in module 20 is configured to verify an account which is logging-in. In this embodiment, an account log-in interface is displayed before the standby interface shows up during the activation of the wireless communication apparatus 100. The account log-in interface comprises an account name input box and a password input box. A user can input an account name and a password of the account respectively into the account name input box and the password input box. In addition, the account name input box may also take the form of a drop-down box and display a plurality of already-created account names for the user to choose. The verification process that the account log-in module 20 performs on an account generally comprises verifying whether the account name of the account does exist and whether the password of the account is correct. If the account name of the account does exist and the password of the account is correct, then the verification passes.

The configuration reading module 30 is configured to read the configuration information corresponding to the account after the account has passed the verification. As described above, the configuration information is preset by the special-authority account according to the usage habits of different users. The configuration information may comprise a screen application list, a function list, an accessing authority, system configuration information, and the like.

The configuration processing module 40 is configured to use the configuration information to configure the wireless communication apparatus 100. In this embodiment, the contents that are actually configured by the configuration processing module 40 include, but are not limited to: applications that are permitted to be displayed on the screen of the wireless communication apparatus 100; activation or deactivation of a wireless module or a background functional module; an accessing authority of a menu or a personal information module; system parameters for displaying or for sounding. The personal information module comprises modules that involve personal information such as a short message, a multimedia message, an e-mail, a telephone directory, a call log and the like.

Referring to FIG. 2, FIG. 2 is a flowchart diagram of a configuring method for a wireless communication apparatus according to an embodiment of the present disclosure. As shown in FIG. 2, the configuring method for a wireless communication apparatus according to this embodiment comprises the following steps.

In step 201, an account which is logging-in is verified. For example, in the step 201, the method verifies whether an account name of the account does exist and whether a password of the account is correct. When the account name of the account does exist and the password of the account is correct, then the verification passes. A preferred implementation of the step 201 will be detailed later.

In step 202, configuration information corresponding to the account is read after the account has passed the verification. As described above, the configuration information is preset by a special-authority account according to the usage habits of different users.

In step 203, the configuration information is used to configure the wireless communication apparatus. For example, in the step 203, the configuration information is used to configure applications displayed on a screen of the wireless communication apparatus, activation or deactivation of a wireless module or a background functional module, an accessing authority of a menu or a personal information module, or system parameters for displaying or for sounding. A preferred implementation of the step 203 will be detailed later.

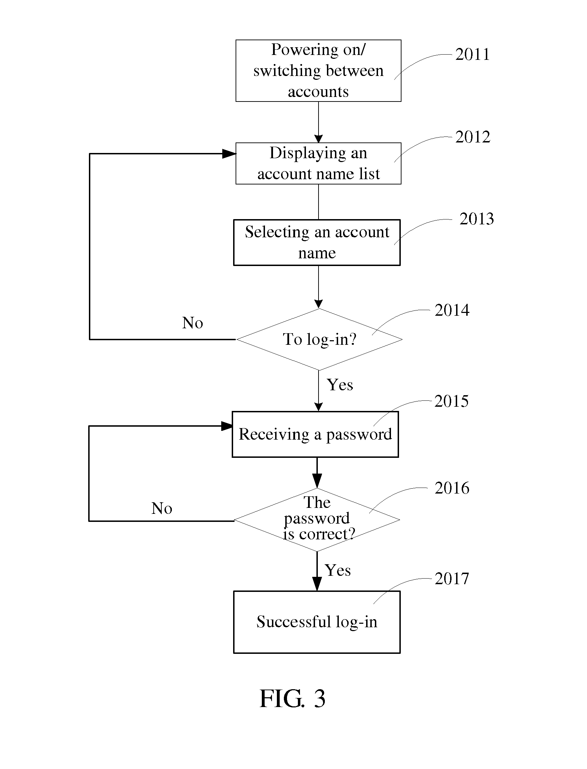

Referring to FIG. 3, FIG. 3 is a detailed flowchart diagram of the step 201 of the configuring method for a wireless communication apparatus according to the embodiment of the present disclosure. As shown in FIG. 3, the step 201 according to this embodiment further comprises the following steps.

In step 2011, an instruction of powering on or switching between accounts is received.

In step 2012, an account name list which comprises a plurality of already-created account names is displayed.

In step 2013, an account name is selected from the account name list according to a selection instruction from the user.

In step 2014, it is determined whether to log in according to a confirmation instruction from the user. If the answer is yes, then the process proceeds to step 2015; if not, then the process returns to the step 2012.

In step 2015, a password input by the user is received.

In step 2016, the password input by the user is compared with the stored password corresponding to the account name to determine whether the password is correct. If the password is correct, then the process proceeds to step 2017; if not, the process returns to the step 2015.

In step 2017, a successful log-in is indicated.

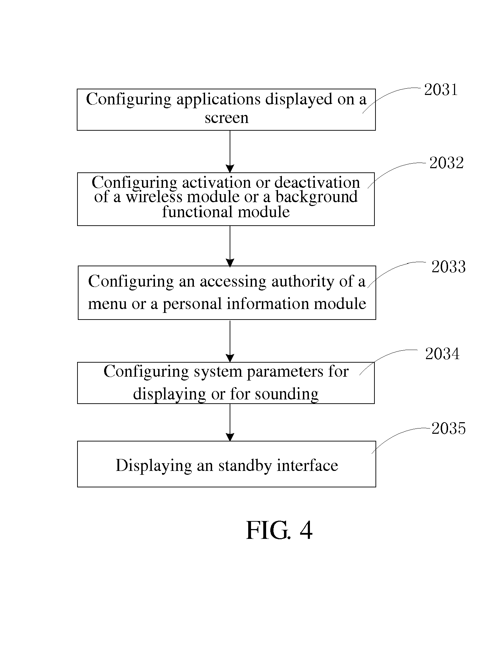

Referring to FIG. 4, FIG. 4 is a detailed flowchart diagram of the step 203 of the configuring method for a wireless communication apparatus according to the embodiment of the present disclosure. As shown in FIG. 4, the step 203 according to this embodiment further comprises the following steps.

In step 2031, a screen application list in the configuration information corresponding to the account name is read and applications displayed on the screen are configured according to the screen application list.

In step 2032, a function list in the configuration information is read and activation or deactivation of a wireless module or a background functional module or the like is configured according to the function list.

In step 2033, an accessing authority in the configuration information is read and an accessing authority of a menu or a personal information module or the like is configured according to the accessing authority which has been read.

In step 2034, system configuration information in the configuration information is read and system parameters for displaying (e.g., fonts or colors) or for sounding are configured according to the system configuration information.

In step 2035, a standby interface is displayed.

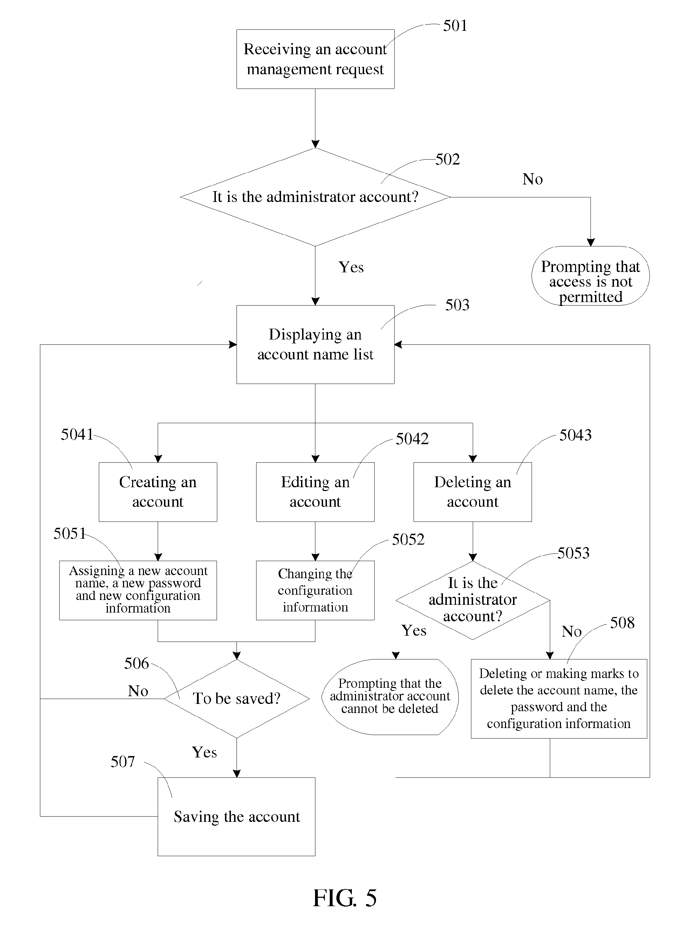

FIG. 5 is a flowchart diagram of an account management process for a wireless communication apparatus according to an embodiment of the present disclosure. As shown in FIG. 5, the account management process for a wireless communication apparatus according to the embodiment of the present disclosure comprises the following steps.

In step 501, an account management request is received.

In step 502, it is determined whether the current logged-in account has the special authority, e.g., the administrator authority. If the answer is no, then the process prompts that the account is not permitted to access; if yes, then the process proceeds to step 503.

In step 503, an account name list is displayed.

In step 5041, an instruction of creating an account is received from the user and the process proceeds to step 5051.

In step 5051, a new account name, a new password and new configuration information are assigned, and then the process proceeds to step 506.

In step 5042, an instruction of editing an account is received from the user and the process proceeds to step 5052.

In step 5052, the account name, the password or the configuration information of an already-created account are changed, and then the process proceeds to step 506.

In step 506, the user is asked whether to save the account information. If the answer is yes, then the process proceeds to step 507; if not, then the process returns to the step 503.

In step 507, the aforesaid account information is saved in a linked list or other data structures.

In step 5043, an instruction of deleting an account is received from the user, and then the process proceeds to step 5053.

In step 5053, it is determined whether the account is an administrator account. If the answer is yes, then the process prompts that the administrator account cannot be deleted; if not, the process proceeds to step 508.

In step 508, the account name, the password and the configuration information are deleted or marked to be deleted from the linked list or other data structures.

According to the above descriptions, the wireless communication apparatus and the configuring method thereof according to the present disclosure use the configuration information customized for the account to configure the wireless communication apparatus automatically, so time for changing configuration items after a user logs in is saved and the user experience is improved.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A configuring method for a wireless communication apparatus, comprising:
verifying an account which is logging-in;
reading configuration information corresponding to the account after the account has passed the verification, wherein the configuration information is preset by a special-authority account;
using the configuration information to configure the wireless communication apparatus;
wherein the step of verifying an account which is logging-in comprises: verifying whether an account name of the account does exist and whether a password of the account is correct, and when the account name of the account does exist and the password of the account is correct, then the verification passes; and
the step of using the configuration information to configure the wireless communication apparatus comprises: configuring applications displayed on a screen of the wireless communication apparatus, configuring activation or deactivation of a wireless module or a background functional module, configuring an accessing authority of a menu or a personal information module, or configuring system parameters for displaying or for sounding.

2. The configuring method for a wireless communication apparatus of claim 1, further comprising:
creating the account and setting the configuration information corresponding to the account by the special-authority account before verifying the account.

3. The configuring method for a wireless communication apparatus of claim 2, further comprising:
resetting the configuration information corresponding to the account or deleting the account by the special-authority account after the special-authority account has created the account and set the configuration information corresponding to the account.

4. A configuring method for a wireless communication apparatus, comprising:
verifying an account which is logging-in;
reading configuration information corresponding to the account after the account has passed the verification, wherein the configuration information is preset by a special-authority account; and
using the configuration information to configure the wireless communication apparatus.

5. The configuring method for a wireless communication apparatus of claim 4, wherein the step of verifying a logged-in account comprises: verifying whether an account name of the account does exist and whether a password of the account is correct, and when the account name of the account does exist and the password of the account is correct, then the verification passes.

6. The configuring method for a wireless communication apparatus of claim 4, wherein the step of using the configuration information to configure the wireless communication apparatus comprises:
configuring applications displayed on a screen of the wireless communication apparatus, configuring activation or deactivation of a wireless module or a background functional module, configuring an accessing authority of a menu or a personal information module, or configuring system parameters for displaying or for sounding.

7. The configuring method for a wireless communication apparatus of claim 4, further comprising:
creating the account and setting the configuration information corresponding to the account by the special-authority account before verifying the account.

8. The configuring method for a wireless communication apparatus of claim 7, further comprising:
resetting the configuration information corresponding to the account or deleting the account by the special-authority account after the special-authority account has created the account and set the configuration information corresponding to the account.

9. A wireless communication apparatus, comprising:
an account log-in module, being configured to verify an account which is logging-in;
a configuration reading module, being configured to read configuration information corresponding to the account after the account has passed the verification, wherein the configuration information is preset by a special-authority account; and
a configuration processing module, being configured to use the configuration information to configure the wireless communication apparatus.

10. The wireless communication apparatus of claim 9, wherein the account log-in module verifies whether an account name of the account does exist and whether a password of the account is correct, and when the account name of the account does exist and the password of the account is correct, then the verification passes.

11. The wireless communication apparatus of claim 9, wherein the configuration processing module uses the configuration information to configure applications displayed on a screen of the wireless communication apparatus, configure activation or deactivation of a wireless module or a background functional module, configure an accessing authority of a menu or a personal information module, or configure system parameters for displaying or for sounding.

12. The wireless communication apparatus of claim 9, further comprising an account management module, wherein the special-authority account creates the account and set the configuration information corresponding to the account via the account management module before verifying the account.

13. The wireless communication apparatus of claim 12, wherein the special-authority account resets the configuration information corresponding to the account or deletes the account via the account management module after the special-authority account has created the account and set the configuration information corresponding to the account.
